# FASCICULE DE BREVET EUROPEEN

(11) **EP 2 836 396 B1**
(45) Date de publication et mention de la délivrance du brevet: **06.05.2020**
(21) Numéro de dépôt: 13715372.2
(22) Date de dépôt: 26.03.2013
(51) Int. Cl.: B60Q 3/208, B32B 17/10, G02B 6/00, E06B 3/66, F21V 8/00, F21Y 115/10

(54) **VITRAGE ECLAIRANT POUR VEHICULE**
LEUCHTENDE FENSTERSCHEIBE FÜR FAHRZEUG
ILLUMINATING GLAZING FOR VEHICLE

(30) Priorité: 10.04.2012 FR 1253254
(43) Date de publication de la demande: 18.02.2015
(73) Titulaire: Saint-Gobain Glass France, 92400 Courbevoie (FR)
(72) Inventeur: VERRAT, Adèle, 60150 Villers Sur Coudun (FR); BÄUERLE, Pascal, 80700 Roye (FR)
(74) Mandataire: Saint-Gobain Recherche
(86) Numéro de dépôt international: PCT/FR2013/050649
(87) Numéro de publication internationale: WO 2013/153303

(56) Documents cités:
- EP-A1- 1 004 433
- WO-A1-00/53410
- WO-A1-2005/063526
- WO-A1-2013/093301
- DE-A1- 10 204 359
- DE-A1- 10 320 614
- DE-U1-202011 105 583
- FR-A1- 2 955 539

## Description

La présente invention concerne un vitrage éclairant pour véhicules, en particulier un vitrage éclairant faisant partie du toit d'un véhicule automobile.

Il est connu d'incorporer des modules de diodes électroluminescentes (modules LED) au niveau du bord de vitrages simples ou feuilletés, de façon à ce que la lumière émise par les LED entre par la tranche d'une feuille de verre et soit guidée par celle-ci jusqu'à un élément diffusant qui extrait la lumière du guide d'onde et la diffuse vers l'intérieur ou l'extérieur du véhicule (voir par exemple les demandes internationales WO 2010/049638, WO 2010/049639, WO 2011/092419 et WO 2011/092420 et la demande française n° 1157011 déposée le 29 juillet 2011 et non encore publiée au moment du dépôt de la présente demande).

Le rendement lumineux de tels vitrages éclairés par la tranche ne dépasse généralement pas 10 % en raison des pertes de lumière dues à l'absorption par le verre servant de guide d'onde et/ou par les matériaux à proximité de la source de lumière, tels que le matériau d'encapsulation (généralement du polyuréthanne chargé de noir de carbone), le cordon de colle servant au collage du vitrage sur la carrosserie du véhicule ou le primaire en dessous de ce cordon de colle.

Lorsque les vitrages éclairés de l'état de la technique sont des toits automobiles, les modules LED se trouvent presque toujours en « zone humide », c'est-à-dire séparés de l'espace intérieur du véhicule par le cordon de colle par lequel le toit est fixé de manière inamovible à la carrosserie du véhicule. Cet emplacement en zone humide nécessite un système d'étanchéité efficace et peu encombrant. Les modules LED sont donc soit encapsulés soit logés dans des systèmes de boîtiers hermétiques assez complexes décrits par exemple dans les demandes internationales WO 2011/092419 et WO 2011/092420 et la demande française n° 1157011 déposée le 29 juillet 2011.

De tels systèmes de montage rendent toutefois le remplacement des modules LED difficile pour des LED logés dans des boîtiers, voire impossible pour les modules LED encapsulés.

Les documents DE 103 20 614 A1 et FR 2 955 539 décrivent des vitrages éclairées connus. Ces vitrages sont des doubles vitrages dans lesquels une des feuilles de verre est éclairée par la tranche.

La présente invention a pour but de résoudre les problèmes ci-dessus, et en particulier celui de la difficulté ou de l'impossibilité de remplacement des LED encapsulées, en rendant les modules accessibles depuis l'intérieur du véhicule. Le placement en « zone sèche » des modules LED obtenu grâce à la présente invention
- rend superflue la protection des modules LED contre l'humidité par un système d'étanchéité performant,
- permet ainsi de supprimer certains matériaux absorbants (encapsulation, cordon de colle, primaire) à proximité des LED, et
- rapproche les LED du centre du vitrage et du moyen d'extraction de la lumière, réduisant ainsi l'absorption de la lumière par la feuille de verre qui joue le rôle de guide d'onde (appelée ci-après « première feuille »).

Dans sa demande française n° 1158720 déposée le 29 septembre 2011 et non encore publiée au moment du dépôt de la présente demande, la Demanderesse a proposé l'utilisation d'un guide d'onde permettant de déplacer les LED vers l'intérieur du véhicule, en zone sèche. L'utilisation de ce guide d'onde implique toutefois le rallongement indésirable du chemin optique à parcourir par la lumière.

La présente invention est basée sur l'idée de déplacer la tranche de la feuille guide d'onde éclairée par les LED, appelée ci-après « tranche d'injection de la lumière » ou tout simplement « tranche d'injection », vers le centre du vitrage jusqu'en zone sèche. Autrement dit, dans la présente invention le cordon de colle fixant le vitrage à la carrosserie du véhicule est, au moins sur une partie du bord du vitrage, en position périphérique par rapport à la tranche d'injection. Ceci implique que, dans cette partie où le cordon de colle est périphérique par rapport à la tranche d'injection, le poids du vitrage est porté non pas par une structure feuilletée mais uniquement par la deuxième feuille non éclairée « mise à nue » par le raccourcissement de la première feuille et par le déplacement de la tranche d'injection de celle-ci vers le centre du vitrage.

La présente invention a ainsi pour premier objet un vitrage éclairant pour véhicule, notamment un toit vitré pour véhicule automobile, comprenant
- une première feuille de verre transparente avec une première face principale, une deuxième face principale et une tranche ;
- une deuxième feuille de verre transparente avec une première face principale, une deuxième face principale et une tranche ;
- un intercalaire de feuilletage en contact adhésif avec la deuxième face principale de la première feuille et avec la première face principale de la deuxième feuille,
- un ou plusieurs modules de diodes électroluminescentes (modules LED) comportant chacun une pluralité de diodes électroluminescentes (LED) et des composants électroniques associés fixés sur un support, par exemple une carte à circuits imprimés (PCB), les modules étant positionnés de manière à ce que la face émettrice des LED soit en regard de la tranche de la première feuille de verre de manière à injecter la lumière dans cette première feuille qui joue alors le rôle de guide d'onde,
- un élément d'extraction de la lumière, situé sur l'une des faces principales de la première feuille de verre,
ledit vitrage étant caractérisé par le fait que la deuxième feuille de verre dépasse la première feuille de verre, au moins au niveau des parties du bord du vitrage où sont logés les modules LED, de manière à créer sur la première face principale de la deuxième feuille de verre ou sur un revêtement couvrant cette face une zone de réception du cordon de colle, périphérique par rapport aux modules LED, qui est apte à recevoir un cordon de colle destiné à fixer le vitrage à la carrosserie du véhicule, et par le fait que la zone de réception du cordon de colle a une largeur comprise entre 20 mm et 100 mm.

Le vitrage de la présente invention est un vitrage feuilleté comportant au moins deux feuilles simples collées l'une à l'autre de manière connue au moyen de l'intercalaire de feuilletage. Il est important de noter que, dans la description ci-après du vitrage, le terme « première feuille » désignera toujours la feuille de verre éclairée au niveau de sa tranche (tranche d'injection) par la ou les sources lumineuses. La première feuille ou feuille éclairée est de préférence celle en contact avec l'intérieur du véhicule. La deuxième feuille de verre est par conséquent de préférence celle en contact avec l'extérieur du véhicule.

Chacune des deux feuilles du vitrage de la présente invention a une tranche et deux faces principales. On appellera première face principale la face destinée à être orientée vers l'intérieur de l'habitacle du véhicule et deuxième face principale celle qui sera tournée vers l'extérieur de l'habitacle du véhicule.

La première feuille de verre est donc celle éclairée par des LED dont les faces émettrices sont en regard de la tranche de ladite feuille, de manière à injecter la lumière dans la première feuille qui joue ainsi le rôle de guide d'onde. Bien entendu la première feuille n'est pas forcément éclairée sur tout son pourtour et le terme « tranche d'injection » désigne uniquement les parties de la tranche de la première feuille contre lesquelles sont placés les modules LED.

Dans la présente invention, toute la tranche de la première feuille n'est pas forcément en « zone sèche », mais toute la « tranche d'injection », c'est-à-dire toutes les parties de la tranche de la première feuille contre lesquelles sont placés des modules LED, est en zone sèche, séparée de la zone humide par le cordon de colle lorsque le vitrage est monté sur un véhicule.

La zone de réception du cordon de colle est donc une zone libre sur la première face de la deuxième feuille de verre qui est en position périphérique par rapport au(x) module(s) LED. L'adjectif « libre » ne signifie toutefois pas que le cordon de colle sera nécessairement collé sur la surface nue du verre. Pour des raisons de sécurité il est en effet préférable d'encapsuler le bord libre de la deuxième feuille, avant application du cordon de colle, par un revêtement. Lorsqu'un tel revêtement est présent, la zone de réception du cordon de colle est alors située sur ce revêtement.

Il est également envisageable que l'intercalaire de feuilletage couvre toute la première surface de la deuxième feuille et s'étende donc jusqu'au bord de celle-ci même dans les zones où elle dépasse la première feuille. La zone de réception du cordon de colle est alors située sur l'intercalaire de feuilletage qui forme un revêtement recouvrant la première face de la deuxième feuille.

La zone de réception du cordon de colle peut donc être, par exemple
- une surface de verre nu, ou
- une surface de verre revêtue d'un matériau d'encapsulation approprié, tel que du polyuréthanne chargé de noire de carbone, ou
- une surface de verre revêtue d'un film de polymère, ou
- une surface de verre couverte par l'intercalaire de feuilletage, ou
- une surface de verre couverte à la fois par l'intercalaire de feuilletage, revêtu à son tour du matériau d'encapsulation.

L'ensemble de ces revêtements couvrant la première face de la deuxième feuille au niveau de son bord, autrement dit dans la zone de réception du cordon de colle, ont avantageusement une épaisseur au plus égale à 5 mm, de préférence inférieure à 4 mm, en particulier inférieure à 3 mm et de manière particulièrement préférée inférieure à 2 mm.

Cette zone de réception du cordon de colle - qu'elle soit sur la surface nue du verre ou sur le revêtement couvrant cette surface - doit être suffisamment large pour recevoir le cordon de colle destiné à fixer de manière étanche et inamovible le vitrage à la carrosserie du véhicule et à délimiter la « zone sèche » côté intérieur de la « zone humide » en communication avec l'atmosphère extérieure. Cette largeur dépend bien entendu de la taille du vitrage et des dimensions du cordon de colle. Elle est typiquement comprise entre 20 mm et 100 mm, de préférence entre 25 mm et 60 mm, et en particulier entre 30 et 50 mm.

Bien que le cordon de colle ne fasse en principe pas nécessairement partie du vitrage de la présente invention, il est envisageable que le vitrage soit livré avec une couche de primaire et/ou avec le cordon de colle. Dans un mode de réalisation de l'invention, le vitrage comprend par conséquent en outre une couche de primaire et/ou un cordon de colle posé sur la zone libre de réception du cordon de colle, en une position périphérique par rapport aux modules LED.

La deuxième feuille de verre du vitrage dépasse donc la première feuille au moins au niveau des parties du bord où sont logés les modules LED. Elle peut toutefois dépasser la première feuille dans des zones beaucoup plus étendues du bord. Par exemple lorsque le vitrage comporte un ou plusieurs modules LED au niveau de deux bords opposés, la tranche de la première feuille peut être en retrait par rapport au bord de la deuxième feuille sur toute la longueur de ces deux bords opposés. On pourrait également envisager que la tranche de la première feuille soit en retrait par rapport au bord de la deuxième feuille sur tout le pourtour du vitrage selon l'invention. Pour des raisons évidentes de résistance mécanique, ce dernier mode de réalisation ne correspond toutefois pas à un mode de réalisation préféré du vitrage.

Dans les différents modes de réalisation ci-dessus, la distance entre la tranche de la deuxième feuille et la tranche de la première feuille, en retrait par rapport à la deuxième feuille, est avantageusement au moins égale à 40 mm, de préférence comprise entre 50 et 100 mm, en particulier entre 55 et 80 mm, au moins au niveau des parties du bord où sont logés les modules LED.

Au niveau des parties du bord où il n'y a pas de modules LED, la distance entre la tranche de la première feuille et la tranche de la deuxième feuille est avantageusement faible, généralement inférieure à 30 mm, de préférence inférieure à 20 mm, en particulier inférieure à 10 mm. Dans un mode de réalisation particulièrement avantageux, cette distance entre les deux tranches est nulle.

Les parties où les bords sont en simple vitrage constituent une zone de fragilité du vitrage, car la deuxième feuille n'est pas une feuille trempée. En cas d'accident et de bris de verre, il y a alors un risque d'apparition de larges zones coupantes, potentiellement dangereuses pour les passagers.

Par ailleurs, en particulier pour le mode de réalisation où le toit vitré est porté totalement par la deuxième feuille de verre, la partie centrale du toit pourrait se désolidariser de la carrosserie en cas d'accident et on perdrait alors la fonction anti-éjection des passagers.

Pour prévenir la formation de telles zones coupantes ainsi que la désolidarisation du toit en cas d'accident, le vitrage de la présente invention comprend de préférence un élément d'encapsulation ayant la forme d'un revêtement recouvrant au moins la tranche de la deuxième feuille de verre et la zone de réception du cordon de colle, c'est-à-dire la partie où la deuxième feuille dépasse la première feuille et les LED. Ce revêtement a de préférence une épaisseur au plus égale à 5 mm, de manière plus préférée inférieure à 4 mm, et en particulier inférieur à 3 mm, voire inférieure à 2 mm.

Dans un mode de réalisation, ce revêtement d'encapsulation s'étend, sur la première face principale de la deuxième feuille de verre, au-delà de la zone libre de réception du cordon, jusqu'à l'intercalaire de feuilletage, c'est-à-dire entre les modules LED et la première face principale de la deuxième feuille. Son épaisseur est alors sensiblement égale à celle de l'intercalaire de feuilletage.

Dans un autre mode de réalisation, l'élément d'encapsulation n'est pas posé bout-à-bout avec l'intercalaire de feuilletage, mais vient recouvrir l'intercalaire de feuilletage qui couvre toute ou partie de la première face principale de la deuxième feuille.

Enfin, dans encore un autre mode de réalisation du vitrage de la présente invention, les modules LED sont fixés directement sur la première face principale de la deuxième feuille et l'élément d'encapsulation s'étend simplement jusqu'aux modules LED, mais non pas en dessous de ceux-ci.

Le positionnement des modules LED en zone sèche supprime toute nécessité d'étanchéification. Par conséquent, les modules LED ne sont de préférence pas encapsulés par l'élément d'encapsulation, mais sont montés librement à proximité de la tranche de la première feuille de manière à ce que les faces émettrices des LED soient en regard de cette tranche (tranche d'injection).

Les modules LED peuvent avantageusement être protégés par un cache amovible, facile à retirer et à repositionner de manière à permettre le remplacement des LED en cas de défaillance. Après montage du vitrage sur le véhicule, ce cache peut à son tour être couvert par la garniture ou bien il peut être apparent car situé en dehors de la zone couverte par la garniture.

Du fait de l'absence d'un matériau d'encapsulation risquant d'obturer l'espace entre la face émettrice de la LED et la tranche d'injection, il n'est pas non plus nécessaire de coller ces deux éléments ensemble au moyen d'une colle transparente.

La disparition des contraintes résultant d'un positionnement en zone humide permet en outre d'utiliser des LED à émission frontale (*top emitting LED*) qui sont disponibles avec des puissances élevées, en des teintes variées et à des prix inférieurs à ceux des LED à émission latérale.

Les matériaux utilisés pour les feuilles de verre, l'intercalaire de feuilletage et l'encapsulation sont familiers à l'homme du métier et utilisés communément dans le domaine des vitrages pour automobiles. Les feuilles de verre sont de préférence en verre minéral. De façon connue, la deuxième feuille de verre en contact avec l'extérieur est de préférence en verre teinté, par exemple en verre Vénus®, TSA3+ ou TSA4+ commercialisés par la Demanderesse, tandis que la première feuille (guide d'onde) est constituée avantageusement d'un verre très clair, peu absorbant, tel que le verre Planilux® également commercialisé par la Demanderesse.

L'intercalaire de feuilletage est typiquement un polymère thermoplastique transparent présentant de bonnes propriétés d'adhésion au verre tel que le poly(vinyle butyral) (PVB), certains polyuréthannes thermoplastiques (TPU) ou les copolymères d'éthylène et d'acétate de vinyle (EVA). Le PVB est particulièrement préféré.

La présente invention a en outre pour objet un véhicule, de préférence un véhicule automobile, comportant un vitrage éclairant selon l'invention. Ce vitrage éclairant fait de préférence partie du toit du véhicule.

L'invention est décrite à présent plus en détail à l'aide de quelques mode de réalisation représentés sur les figures annexées dans lesquelles
la figure 1 montre une coupe transversale du bord d'un premier mode de réalisation d'un vitrage selon l'invention,
la figure 2 montre une coupe transversale du bord d'un deuxième mode de réalisation d'un vitrage selon l'invention,
la figure 3 montre une coupe transversale du bord d'un troisième mode de réalisation d'un vitrage selon l'invention,
les figures 4a, 4b et 4c représentent, de façon schématique, trois modes de réalisation du vitrage de l'invention vus par le dessous.

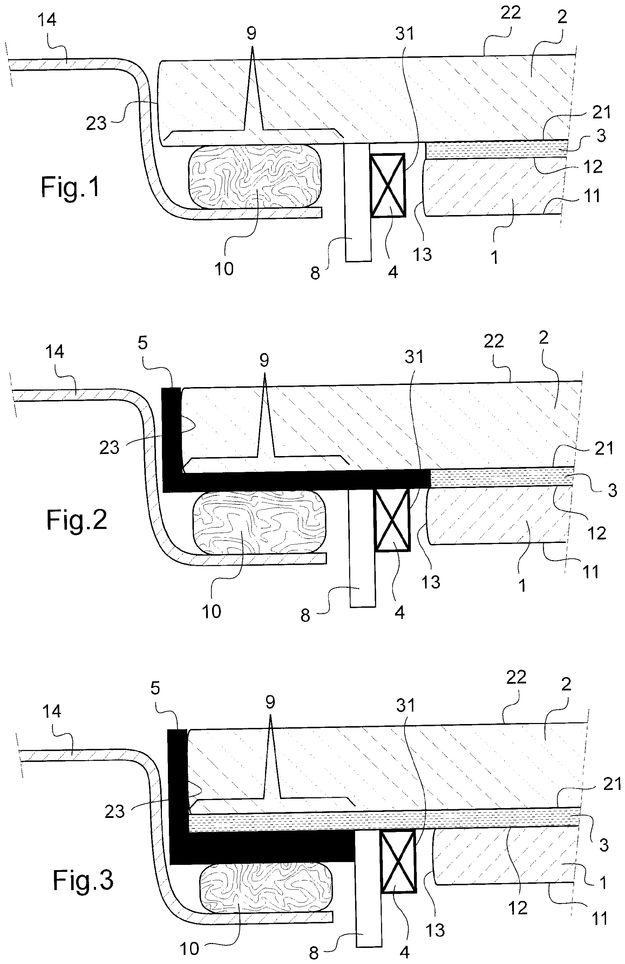

Le mode de réalisation représenté à la figure 1 correspond à l'invention sous sa forme la plus simple. En bordure d'un vitrage feuilleté formé d'une première feuille de verre 1 et d'une deuxième feuille de verre 2, collées l'une à l'autre au moyen d'un intercalaire de feuilletage, est disposé un module de diodes électroluminescentes (module LED) 8 avec une LED dont la face émettrice 31 est en regard de la tranche 13 de la première feuille. La première surface principale 11 de la première feuille de verre 1 et la deuxième surface principale 22 de la deuxième feuille de verre 2 sont en contact respectivement avec l'intérieur et l'extérieur du véhicule. Le vitrage feuilleté est collé sur la carrosserie 14 du véhicule à l'aide d'un cordon de colle 10. Ce cordon de colle 10 est en contact direct de la première surface principale 21 de la deuxième feuille au niveau d'une zone libre 9 de réception du cordon de colle. Cette zone 9 et le cordon de colle 10 se trouvent donc en position périphérique par rapport au module LED 8. Ce dernier est ainsi en « zone sèche », isolé du milieu extérieur (« zone humide »), par le cordon de colle 10. Le module LED peut être soustrait à la vue des passagers du véhicule par la garniture et/ou un cache amovible (non représentés). Il n'existe aucune nécessité d'enfermer le module LED de façon étanche à l'humidité.

Le vitrage représenté à la figure 2 diffère de celui de la figure 1 principalement par la présence d'un élément d'encapsulation 5, ayant la forme d'un revêtement mince, qui couvre la tranche 23 de la deuxième feuille de verre 2 et la zone libre 9 de réception du cordon de colle et s'étend jusqu'à l'intercalaire de feuilletage 3. Sur toute la zone où l'élément d'encapsulation est en contact avec la première surface principale 21 de la deuxième feuille, il présente substantiellement la même épaisseur que l'intercalaire de feuilletage 3. Le module LED et le cordon de colle 10 sont en contact, non pas avec la surface nue de la première face principale 21 de la deuxième feuille 2, mais avec l'élément d'encapsulation 5. L'élément d'encapsulation sert principalement à prévenir, en cas d'accident et bris de verre, la formation de longues arêtes coupantes au niveau de la deuxième feuille de verre 2.

Dans le troisième mode de réalisation du vitrage représenté à la figure 3, l'intercalaire de feuilletage 3 s'étend jusqu'au bord de la première surface principale 21 de la deuxième feuille et couvre ainsi toute la zone libre 9 de réception du cordon de colle. Cette zone est en outre couverte par l'élément d'encapsulation 5 qui est ici plus épais que sur la figure 2. Le module LED 8 vient s'adosser contre l'élément d'encapsulation.

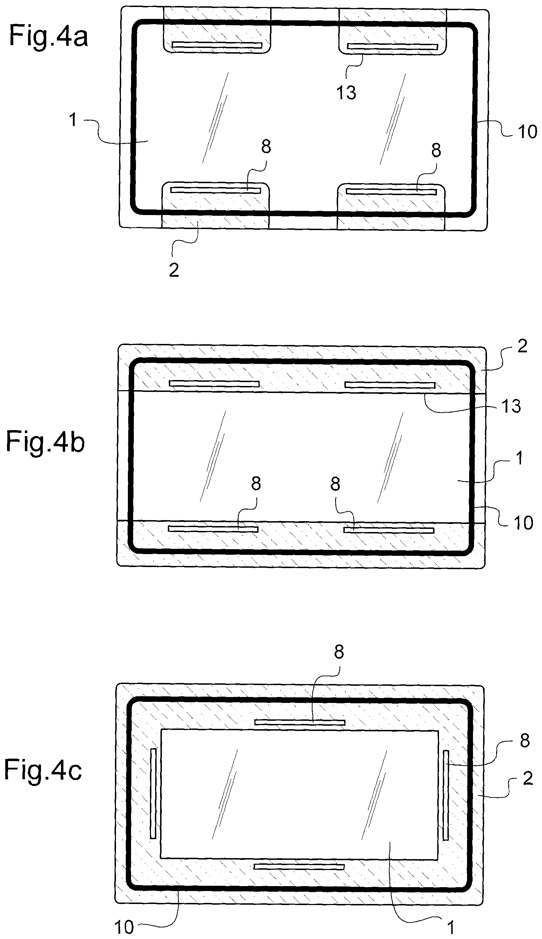

Sur les figures 4a, b et c ont été représentés trois modes de réalisation d'un vitrage selon l'invention, vu par le dessous, le cordon de colle étant appliqué sur la face inférieure du vitrage. Les trois modes de réalisation se distinguent essentiellement par la forme de la première feuille de verre 1.

Sur la figure 4a, cette première feuille de verre 1 comporte quatre encoches dans lesquelles sont logés les quatre modules LED 8, chaque module étant en regard de la tranche 13 de la première feuille. La deuxième feuille de verre 2 a une forme rectangulaire et dépasse donc la première feuille 1 au niveau des quatre encoches. Le cordon de colle 10 est dans une position périphérique par rapport à l'ensemble des modules LED 8. Lorsque ce vitrage feuilleté est collé sur le véhicule au moyen du cordon de colle 10, son poids sera porté essentiellement par la structure feuilletée comprenant les première et deuxième feuilles de verre (1,2).

Sur la figure 4b, la première feuille de verre 1 a une forme rectangulaire, mais est moins large que la deuxième feuille de verre 2. Cette dernière dépasse donc la première feuille de verre sur deux bords opposés. Quatre modules LED 8 sont installés sur la face inférieure (première face principale) de la deuxième feuille de verre en regard de la tranche 13 de la première feuille de verre. Sur ce mode de réalisation, le poids du vitrage, une fois collé à la carrosserie, sera porté en grande partie par les bords non feuilletés de la deuxième feuille de verre.

Enfin, dans le troisième mode de réalisation, représenté à la figure 4c, la deuxième feuille de verre 2 dépasse la première feuille de verre sur tout le pourtour du vitrage. Le cordon de colle 10 est en contact uniquement avec la première face principale de la deuxième feuille de verre et après collage sur la carrosserie, le poids du vitrage sera porté uniquement par la deuxième feuille de verre.

## Revendications

1. Vitrage éclairant pour véhicule, comprenant
- une première feuille de verre (1) transparente avec une première face principale (11), une deuxième face principale (12) et une tranche (13) ;
- une deuxième feuille de verre (2) transparente avec une première face principale (21), une deuxième face principale (22) et une tranche (23) ;
- un intercalaire de feuilletage (3) en contact adhésif avec la deuxième face principale (12) de la première feuille (1) et avec la première face principale (21) de la deuxième feuille (2),
- un ou plusieurs modules de diodes électroluminescentes (modules LED) (8) comportant chacun une pluralité de diodes électroluminescentes (LED) (4) et des composants électroniques associés fixés sur un support, les modules étant positionnés de manière à ce que la face émettrice (31) des LED soit en regard de la tranche (13) de la première feuille de verre,
- un élément d'extraction de la lumière, situé sur l'une des faces principales de la première feuille de verre,
**caractérisé par le fait que** la deuxième feuille de verre dépasse la première feuille de verre, au moins au niveau des parties du bord du vitrage où sont logés les modules LED, de manière à créer sur la première face principale (21) de la deuxième feuille de verre ou sur un revêtement couvrant cette face, une zone (9) de réception du cordon de colle, périphérique par rapport aux modules LED (8), qui est apte à recevoir un cordon de colle (10) destiné à fixer le vitrage à la carrosserie du véhicule (14), et **par le fait que** la zone (9) de réception du cordon de colle a une largeur comprise entre 20 mm et 100 mm

2. Vitrage selon la revendication 1, **caractérisé par le fait qu'**il comprend en outre un cordon de colle (10) posé sur la zone (9) de réception du cordon de colle, en une position périphérique par rapport aux modules LED.

3. Vitrage selon l'une quelconque des revendications précédentes, **caractérisé par le fait qu'**il comprend en outre un élément d'encapsulation (5) ayant la forme d'un revêtement recouvrant au moins la tranche (23) de la deuxième feuille de verre et la zone (9) de réception du cordon de colle, ledit revêtement ayant de préférence une épaisseur au plus égale à 5 mm.

4. Vitrage selon la revendication 3, **caractérisé par le fait que** l'élément d'encapsulation (5) s'étend, sur la première face principale (21) de la deuxième feuille de verre, au-delà de la zone (9) de réception du cordon de colle, jusqu'à l'intercalaire de feuilletage (3).

5. Vitrage selon la revendication 4, **caractérisé par le fait que** dans la zone au-delà de la zone de réception du cordon de colle, l'épaisseur de l'élément d'encapsulation est sensiblement égale à celle de l'intercalaire (3) de feuilletage.

6. Vitrage éclairant selon l'une quelconque des revendications précédentes, **caractérisé par** le fait les modules LED ne sont pas encapsulés par l'élément d'encapsulation.

7. Vitrage éclairant selon l'une quelconque des revendications précédentes, **caractérisé par le fait que** les modules LED sont protégés par un cache amovible.

8. Vitrage éclairant selon l'une quelconque des revendications précédentes, **caractérisé par le fait qu'**au niveau des parties du bord où sont logés les modules LED, la distance entre la tranche (13) de la première feuille et la tranche (23) de la deuxième feuille est au moins égale à 40 mm, de préférence comprise entre 50 et 100 mm.

9. Véhicule, de préférence véhicule automobile, comportant un vitrage éclairant selon l'une quelconque des revendications précédentes.

10. Véhicule selon la revendication précédente, **caractérisé par le fait que** le vitrage éclairant fait partie du toit du véhicule.

## Patentansprüche

1. Leuchtende Fensterscheibe für Fahrzeug, umfassend
- eine erste transparente Glasscheibe (1) mit einer ersten Hauptseite (11), einer zweiten Hauptseite (12) und einer Kante (13);
- eine zweite transparente Glasscheibe (2) mit einer ersten Hauptseite (21), einer zweiten Hauptseite (22) und einer Kante (23);
- eine Laminatzwischenlage (3) in Haftkontakt mit der zweiten Hauptseite (12) der ersten Scheibe (1) und mit der ersten Hauptseite (21) der zweiten Scheibe (2),
- ein oder mehrere Leuchtdiodenmodule (LED-Module) (8) mit jeweils einer Vielzahl von an einem Träger angebrachten Leuchtdioden (LEDs) (4) und zugehörigen elektronischen Bauteilen, wobei die Module so positioniert sind, dass die Abstrahlfläche (31) der LEDs der Kante (13) der ersten Glasscheibe zugewandt ist,
- ein Lichtextraktionselement, das sich auf einer der Hauptflächen der ersten Glasscheibe befindet,
**dadurch gekennzeichnet, dass** die zweite Glasscheibe zumindest an den Abschnitten des Randes der Glasscheibe, an denen die LED-Module untergebracht sind, über die erste Glasscheibe hinausragt, um auf der ersten Hauptfläche (21) der zweiten Glasscheibe oder auf einer diese Fläche bedeckenden Abdeckung einen Bereich (9) zur Aufnahme des Klebstoffstreifens zu erzeugen, der in Bezug auf die LED-Module (8) umlaufend ist und wobei der Bereich dazu ausgelegt ist, einen Klebstoffstreifen (10) aufzunehmen, mit dem die Glasscheibe an der Karosserie des Fahrzeugs (14) befestigt werden soll, und dadurch, dass der Bereich (9) zur Aufnahme des Klebstoffstreifens eine Breite zwischen 20 mm und 100 mm aufweist

2. Glasscheibe nach Anspruch 1, **dadurch gekennzeichnet, dass** sie ferner einen Klebstoffstreifen (10) umfasst, der auf dem Bereich (9) zur Aufnahme des Klebstoffstreifens, der in Bezug auf die LED-Module umlaufend ist, angeordnet ist.

3. Glasscheibe nach einem der vorhergehenden Ansprüche, **dadurch gekennzeichnet, dass** sie ferner ein Verkapselungselement (5) in Form einer Abdeckung umfasst, die mindestens die Kante (23) der zweiten Glasscheibe und den Bereich (9) zur Aufnahme des Klebstoffstreifens abdeckt, wobei diese Abdeckung vorzugsweise eine Dicke von höchstens 5 mm aufweist.

4. Glasscheibe nach Anspruch 3, **dadurch gekennzeichnet, dass** sich das Einkapselungselement (5) auf der ersten Hauptfläche (21) der zweiten Glasscheibe über den Bereich (9) zur Aufnahme des Klebstoffstreifens hinaus bis zur Laminatzwischenlage (3) erstreckt.

5. Glasscheibe nach Anspruch 4, **dadurch gekennzeichnet, dass** in dem Bereich jenseits des Bereichs zur Aufnahme des Klebstoffstreifens die Dicke des Verkapselungselementes im Wesentlichen gleich jener der Laminatzwischenlage (3) ist.

6. Leuchtende Fensterscheibe nach einem der vorhergehenden Ansprüche, **dadurch gekennzeichnet, dass** die LED-Module nicht von dem Verkapselungselement verkapselt sind.

7. Leuchtende Fensterscheibe nach einem der vorhergehenden Ansprüche, **dadurch gekennzeichnet, dass** die LED-Module durch eine abnehmbare Abdeckung geschützt sind.

8. Leuchtende Fensterscheibe nach einem der vorhergehenden Ansprüche, **dadurch gekennzeichnet, dass** an den Randbereichen, an denen die LED-Module untergebracht sind, der Abstand zwischen der Kante (13) der ersten Scheibe und der Kante (23) der zweiten Scheibe mindestens 40 mm, vorzugsweise zwischen 50 und 100 mm, beträgt.

9. Fahrzeug, vorzugsweise ein Kraftfahrzeug, mit einer leuchtenden Fensterscheibe nach einem der vorhergehenden Ansprüche.

10. Fahrzeug nach dem vorhergehenden Anspruch, **dadurch gekennzeichnet, dass** die leuchtende Fensterscheibe Teil des Fahrzeugdaches ist.

## Claims

1. A lighting glazing for a vehicle, comprising
- a first transparent sheet of glass (1) with a first main face (11), a second main face (12) and a rim (13);
- a second transparent sheet of glass (2) with a first main face (21), a second main face (22) and a rim (23);
- a lamination separator (3) in adhesive contact with the second main face (12) of the first sheet (1) and with the first main face (21) of the second sheet (2),
- one or more light-emitting diode modules (LED modules) (8) each comprising a plurality of light-emitting diodes (LEDs) (4) and associated electronic components fixed onto a support, the modules being positioned in such a way that the emitting face (31) of the LEDs is facing the rim (13) of the first sheet of glass,
- a light extraction element, preferably situated on one of the main faces of the first sheet of glass,
**characterized in that** the second sheet of glass extends beyond the first sheet of glass, at least in the parts of the edge of the glazing where the LED modules are housed, so as to create, on the first main face (21) of the second sheet of glass or on a coating covering this face, an area (9) for receiving the bead of glue, peripheral relative to the LED modules (8), which is suitable for receiving a bead of glue (10) intended to fix the glazing to the bodywork of the vehicle (14), and **in that** the area (9) for receiving the bead of glue has a width of between 20 mm and 100 mm.

2. The glazing as claimed in claim 1, **characterized in that** it also comprises a bead of glue (10) applied to the area (9) for receiving the bead of glue, in a position peripheral relative to the LED modules.

3. The glazing as claimed in any one of the preceding claims, **characterized in that** it also comprises an encapsulation element (5) in the form of a coating covering at least the rim (23) of the second sheet of glass and the area (9) for receiving the bead of glue, said coating preferably having a thickness at most equal to 5 mm.

4. The glazing as claimed in claim 3, **characterized in that** the encapsulation element (5) extends, on the first main face (21) of the second sheet of glass, beyond the area (9) for receiving the bead of glue, as far as the lamination separator (3).

5. The glazing as claimed in claim 4, **characterized in that**, in the area beyond the area for receiving the bead of glue, the thickness of the encapsulation element is substantially equal to that of the lamination separator (3).

6. The lighting glazing as claimed in any one of the preceding claims, **characterized in that** the LED modules are not encapsulated by the encapsulation element.

7. The lighting glazing as claimed in any one of the preceding claims, **characterized in that** the LED modules are protected by a removable cover.

8. The lighting glazing as claimed in any one of the preceding claims, **characterized in that**, in the parts of the edge where the LED modules are housed, the distance between the rim (13) of the first sheet and the rim (23) of the second sheet is at least equal to 40 mm, preferably between 50 and 100 mm.

9. A vehicle, preferably a motor vehicle, comprising a lighting glazing as claimed in any one of the preceding claims.

10. The vehicle as claimed in the preceding claim, **characterized in that** the lighting glazing forms part of the roof of the vehicle.
